Europäisches Patentamt

(19) European Patent Office

Office européen des brevets

(11) Veröffentlichungsnummer: **0 121 599**
**B1**

(12) # EUROPÄISCHE PATENTSCHRIFT

(45) Veröffentlichungstag der Patentschrift:
**13.05.87**

(51) Int. Cl.⁴: **B 65 G 53/22,** B 65 G 53/66

(21) Anmeldenummer: **83112321.1**

(22) Anmeldetag: **07.12.83**

(54) **Verfahren und Vorrichtung zur pneumatischen Förderung von Feingut.**

(30) Priorität: **15.03.83 DE 3309210**

(43) Veröffentlichungstag der Anmeldung:
**17.10.84 Patentblatt 84/42**

(45) Bekanntmachung des Hinweises auf die Patenterteilung:
**13.05.87 Patentblatt 87/20**

(84) Benannte Vertragsstaaten:
**BE DE FR GB**

(56) Entgegenhaltungen:
**WO - A - 83/03593**
**DE - A - 2 461 093**
**FR - A - 2 415 592**

(73) Patentinhaber: **Krupp Polysius AG,**
**Graf-Galen-Strasse 17, D-4720 Beckum (DE)**

(72) Erfinder: **Heinemann, Otto, Dipl.-Ing., Galileistrasse 8,**
**D-4722 Ennigerloh (DE)**

(74) Vertreter: **Tetzner, Volkmar, Dr.-Ing. Dr. Jur.,**
**Van-Gogh-Strasse 3, D-8000 München 71 (DE)**

**Beschreibung**

Die Erfindung betrifft ein Verfahren entsprechend dem Oberbegriff des Anspruches 1 sowie eine Vorrichtung zur Durchführung dieses Förderverfahrens.

Ein Verfahren der im Oberbegriff des Anspruches 1 vorausgesetzten Art ist durch die DE-B-2461579 bekannt. Bei mengenmässig konstant geregelter Auflockerungs- bzw. Düsenluft entspricht der pneumatische Auflockerungsdruck im Fördergefäss bzw. der an der Förderdüse herrschende Druck der Füllhöhe des Fördergefässes (d.h. der auf dem Auflockerungsboden lastenden Gutsäule, da der über der Gutsäule befindliche Raum des Fördergefässes entlüftet ist.

Will man nun den an der Förderdüse herrschenden Druck vergrössern, so muss gleichzeitig die Füllhöhe vergrössert werden, da andernfalls der überschüssige Druck durch die Gutsäule hindurch in den entlüfteten Raum oberhalb der Gutsäule entweichen würde. Wie in der DE-B-2461579 im einzelnen dargelegt ist, entspricht jedem Wert des pneumatischen Auflockerungsdruckes eine bestimmte Austragsleistung des Fördergefässes. Verändert man daher den Auflockerungsdruck bzw. die Füllhöhe im Fördergefäss, so lässt sich damit die Förderleistung einstellen.

Um bei diesem bekannten Verfahren die Austragsleistung des Fördergefässes von einem minimalen Wert auf einen maximalen Wert zu ändern, muss die Füllhöhe im Fördergefäss erheblich vergrössert werden; bedingt insbesondere durch die begrenzte Leistungsfähigkeit des Zufördergerätes (über das Gut in das Fördergefäss zur Vergrösserung der Füllhöhe nachgespeist wird) ist eine solche Erhöhung der Austragsleistung nur mit einer gewissen Ansprechverzögerung zu erreichen. Entsprechendes gilt, wenn die Austragsleistung des Fördergefässes von einem hohen Wert auf einen niedrigen Wert verringert werden soll; hier hängt es von der Förderleistung des Fördergefässes ab, wie rasch die Füllhöhe im Fördergefäss und damit die Austragsleistung verkleinert wird.

Es gibt nun jedoch Anwendungsfälle (etwa die Dosierung von Brennstoff, wie Kohlenstaub, zu einem Brenner), in denen gewünschte Änderungen der Austragsleistung des Fördergefässes besonders rasch erfolgen müssen. Für diese Anwendungsfälle muss das Verfahren gemäss DE-B-2461579 modifiziert werden.

Durch die DE-A-2461093 ist ferner ein Verfahren zur Regelung des Gewichtsdurchsatzes von pulverförmigem Material in einer pneumatischen Fördervorrichtung bekannt, bei dem für einen gegebenen Gewichtsdurchsatz der Druck des eingeblasenen Gases gemessen und zum Aufrechterhalten des Druckes auf einem vorbestimmten Wert die in die verwirbelte Beschickungssäule eingeleitete Menge an pulverförmigem Material beeinflusst wird.

Durch die als ältere Anmeldung nachveröffentlichte WO 83/03593 ist ein Förderverfahren bekannt, das ein Druckgefäss und ein hiermit in Reihe geschaltetes Speichergefäss benützt. Aus diesen Gefässen wird das Gut über ein Bodenventil und eine hieran anschliessende pneumatische Förderleitung abgezogen, wobei das Druckgefäss in diskontinuierlicher Betriebsweise entleert und über das Speichergefäss wieder gefüllt wird.

Hierbei wird somit – im Unterschied zur vorliegenden Erfindung – zum Zwecke einer Leistungsänderung der Druck über der Gutsäule des Fördergefässes und nicht die Höhe der Gutsäule.

Der Erfindung liegt die Aufgabe zugrunde, das im Oberbegriff des Anspruches 1 vorausgesetzte Verfahren dahin weiterzuentwickeln, dass Änderungen der Förderleistung besonders rasch, d.h. mit sehr kleiner Ansprechverzögerung, erfolgen. Weiterhin soll das erfindungsgemässe Verfahren eine besonders genaue Konstanthaltung der eingestellten Förderleistung ermöglichen, und zwar auch dann, wenn die Gutzufuhr zum Fördergefäss durch eine einfache Ein-/Ausschaltsteuerung erfolgt oder aus anderen Gründen stark schwankt. Schliesslich ist es ein Ziel der Erfindung, das Förderverfahren so auszubilden, dass eine Eichung einer nach diesem Verfahren arbeitenden Anlage besonders genau und ohne Zuhilfenahme eines besonderen Eichgefässes möglich ist.

Diese Aufgabe wird erfindungsgemäss durch das kennzeichnende Merkmal des Anspruches 1 gelöst.

Durch die FR-A-2415592 ist ein Förderverfahren bekannt, bei dem einerseits das Fördergefäss über eine Schleuse mit dem pulverförmigem Material versorgt wird und bei dem andererseits der über der Materialsäule im Fördergefäss herrschende Gasdruck in Abhängigkeit von der gewünschten Förderleistung so beeinflusst wird, dass auf dem Niveau der Förderdüse das für die gewünschte Gutförderung erforderliche Druckgleichgewicht herrscht.

Durch die Verwendung eines mit dem Fördergefäss verbundenen Speicherraumes ist es bei der Erfindung möglich, zum Zwecke einer gewünschten Vergrösserung der Förderleistung Gut aus dem Speicherraum in das Fördergefäss zu überführen und dadurch ganz rasch die Füllhöhe im Fördergefäss, den Auflockerungsdruck und damit die Austragsleistung zu vergrössern. In entsprechender Weise kann bei einer gewünschten Verringerung der Förderleistung Gut sehr schnell aus dem Fördergefäss in den Speicherraum überführt werden, wodurch die Füllhöhe und der Auflockerungsdruck im Fördergefäss sinken und sich infolgedessen die Austragsleistung verkleinert. Da die Gutbewegungen zwischen dem Speicherraum und dem Fördergefäss ohne nennenswerte Zeitverzögerung erfolgen, sind sehr schnelle Änderungen der Förderleistung nach oben oder unten möglich.

Ein weiterer wesentlicher Vorteil des erfindungsgemässen Verfahrens besteht darin, dass sich eine eingestellte Förderleistung sehr genau konstant halten lässt, da kleinste Schwankungen der Füllhöhe im Fördergefäss durch entsprechende Gutbewegungen aus dem bzw. in den Speicherraum sofort ausgeglichen werden. Die Regelung ist dabei völlig unabhängig von Schwankungen in der Gutzufuhr zum Fördergefäss; diese Gutzufuhr kann daher z. B. in besonders einfacher Weise durch eine einfache Ein-/Ausschaltung erfolgen.

Wie noch im einzelnen anhand eines Ausführungsbeispieles erläutert wird, zeichnet sich das erfindungsgemässe Verfahren weiterhin durch eine besonders einfache und genaue Eichung einer nach diesem Verfahren arbeitenden Förderlage aus.

Bei dem erfindungsgemässen Verfahren steht das Gut im Speicherraum unter einem regelbaren Druck, wobei die Gutbewegung zwischen dem Speicherraum und dem Fördergefäss durch Beeinflussung des auf das Gut im Speicherraum wirkenden Druckes gesteuert wird. Vorzugsweise findet hierbei ein pneumatischer Druck Verwendung, wie anhand der Ausführungsbeispiele noch näher erläutert wird. Es ist jedoch im Rahmen der Erfindung auch möglich, das Gut im Speicherraum mittels einer Rollenmembrane oder mittels eines geeigneten Zylinder-Kolbensystems unter hydraulischen Druck zu setzen.

Zur Konstanthaltung der Füllhöhe des Fördergefässes (und damit der eingestellten Förderleistung) wird vorzugsweise der pneumatische Bodendruck überwacht und bei Abweichungen dieses Bodendruckes vom vorgegebenen Sollwert der auf das Gut im Speicherraum wirkende Druck verändert (was eine entsprechende Gutbewegung zwischen Speicherraum und Fördergefäss zur Folge hat). Da der pneumatische Bodendruck und der an der Förderdüse herrschende Druck etwa gleich gross sind und bei mengenmässig konstant geregelter Auflockerungs- bzw. Düsenluft beide der Füllhöhe im Fördergefäss annähernd proportional sind, kann im Rahmen der Erfindung zur Konstanthaltung der Füllhöhe des Fördergefässes statt des pneumatischen Bodendruckes auch der an der Förderdüse herrschende Druck verwendet werden.

Weitere Merkmale der Erfindung sind Gegenstand der Unteransprüche und werden im Zusammenhang mit der folgenden Beschreibung einiger Ausführungsbeispiele näher erläutert.

In der Zeichnung zeigen
Fig. 1 eine Schemadarstellung eines ersten Ausführungsbeispieles einer nach dem erfindungsgemässen Verfahren arbeitenden Anlage;
Fig. 2 bis 4 Schemadarstellung von weiteren Ausführungsbeispielen.

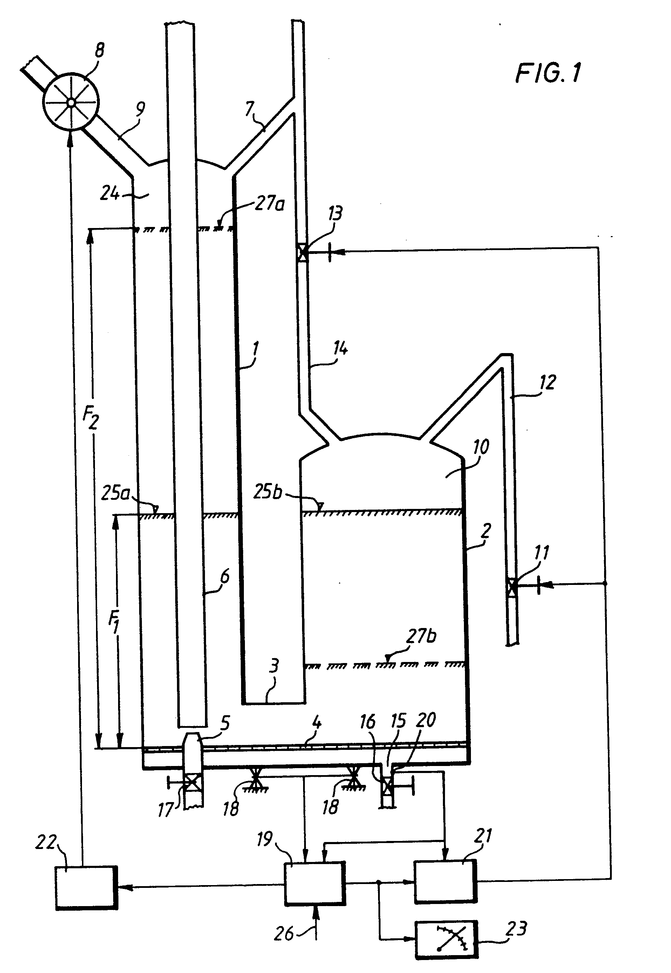

Die Anlage gemäss Fig. 1 enthält ein Fördergefäss 1 und einen Speicherraum 2, die durch einen Verbindungsschenkel 3 nach Art kommunizierender Röhren miteinander verbunden sind. Das Fördergefäss 1 und der Speicherraum 2 sind auf gleicher Bodenhöhe angeordnet und mit einem gemeinsamen pneumatischen Auflockerungsboden 4 versehen.

Im Bodenbereich des Fördergefässes 1 ist eine Förderdüse 5 angeordnet, über der sich die Eintrittsöffnung einer pneumatischen Förderleitung 6 befindet, die das Fördergefäss 1 in vertikaler Richtung durchsetzt.

Im oberen Bereich des Fördergefässes 1 ist ein Entlüftungsanschluss 7 sowie ein mit einer Zellenradschleuse 8 versehener Gutzuführanschluss 9 vorgesehen.

Der Speicherraum 2 besitzt einen grösseren Querschnitt und eine kleinere Höhe als das Fördergefäss 1. Der lufterfüllte obere Bereich 10 des Speicherraumes 2 ist mit einem durch ein Ventil 11 regelbaren Luftzufuhranschluss 12 sowie mit einem durch ein Ventil 13 regelbaren Luftableitungsanschluss 14 verbunden.

Der Luftanschluss zum Auflockerungsboden 4 ist mit 15 bezeichnet. In diesem Luftanschluss 15 ist ein Konstantmengenregelventil 16 angeordnet. Ein weiteres solches Ventil 17 ist der Förderdüse 5 vorgeschaltet.

Das vom Fördergefäss 1 und vom Speicherraum 2 gebildete System stützt sich auf Druckmessdosen 18 ab. Das dem Gewicht von Fördergefäss 1, Speicherraum 2 und darin enthaltenem Gut entsprechende Signal der Druckmessdosen 18 wird einem Rechner 19 zugeführt. Eine Druckmesssonde 20 liefert ein dem pneumatischen Auflockerungsdruck (dem sog. Bodendruck) entsprechendes Signal an den Rechner 19 und einen Regler 21, der auf die Ventile 11 und 13 wirkt. Weiterhin enthält die Anlage noch einen Regler 22 sowie eine Anzeigeeinrichtung 23.

Die Funktion der Anlage gemäss Fig. 1 im Betrieb ist folgendermassen:

Herrscht im oberen Bereich 10 des Speicherraumes 2 Atmosphärendruck (ebenso wie über den Entlüftungsanschluss 7 stets im oberen Bereich 24 des Fördergefässes 1), so nimmt das Gut im Fördergefäss 1 und im Speicherraum 2 gleiche Füllhöhe ein (Füllstand 25a und 25b). Der pneumatische Auflockerungsdruck (Luftanschluss 15) bzw. der etwa gleich grosse pneumatische Druck an der Förderdüse 5 entsprechen der Füllhöhe $F_1$ bzw. einer Förderleistung $Q_1$. In das Fördergefäss 1 wird nun über den Gutzuführanschluss 9 grundsätzlich so viel Gut nachgespeist, wie über die Förderleitung 6 ausgetragen wird. Unabhängig von Schwankungen der Gutzufuhr (über den Gutzuführanschluss 9) wird jedoch die Füllhöhe $F_1$ und damit die eingestellte Förderleistung $Q_1$ dadurch konstant gehalten, dass bei einer etwaigen Verringerung der Füllhöhe $F_1$ aus dem Speicherraum 2 so viel Gut in das Fördergefäss 1 überführt wird, dass sich wieder die ursprüngliche Füllhöhe $F_1$ einstellt. Diese Konstanthaltung der eingestellten Füllhöhe des Fördergefässes 1 erfolgt durch Überwachung des Auflockerungsdruckes mittels der Druckmesssonde 20. Weicht der hier festgestellte Istwert von dem dem Rechner 19 (bei 26) und dem Regler 21 zugeführten Sollwert ab, so liefert der Regler 21 ein entsprechendes Signal an die Ventile 11 bzw. 13: Sinkt die Füllhöhe im Fördergefäss 1 unter den eingestellten Wert und verringert sich infolgedessen der Auflockerungsdruck, so öffnet das Ventil 11 und schliesst das Ventil 13. Hierdurch vergrössert sich der Druck im oberen Bereich 10 des Speicherraumes 2, und es wird so viel Gut aus dem Speicherraum 2 in das Fördergefäss 1 gedrückt, bis sich die ursprüngli-

che Füllhöhe $F_1$ wieder eingestellt hat. Steigt dagegen die Füllhöhe über den vorgegebenen Wert $F_1$ und vergrössert sich infolgedessen der Auflockerungsdruck über den Sollwert, so öffnet der Regler 21 das Ventil 13 und schliesst das Ventil 11. Dadurch wird der Druck im oberen Bereich 10 des Speicherraumes 2 verkleinert, und es fliesst Gut aus dem Fördergefäss 1 in den Speicherraum 2.

Soll nun die Austragsleistung des Fördergefässes 1 vom Wert $Q_1$ auf den Wert $Q_2$ rasch vergrössert werden, so muss hierzu die Füllhöhe im Fördergefäss 1 auf den Wert $F_2$ vergrössert werden. Zu diesem Zweck wird dem Rechner 19 ein entsprechend höherer Sollwert der Förderleistung (bei 26) vorgegeben. Der vom Regler 21 angestellte Vergleich zwischen dem Istwert und Sollwert des Auflockerungsdruckes führt dazu, dass der Regler 21 das Ventil 11 öffnet und das Ventil 13 schliesst und im oberen Bereich 10 des Speicherraumes 2 einen so grossen Druck aufbaut, dass sich im Speicherraum 2 der Füllstand 27b und im Fördergefäss 1 demgemäss der Füllstand 27a einstellt. Bei Vorgabe einer höheren gewünschten Förderleistung wird also schlagartig Gut aus dem Speicherraum 2 in das Fördergefäss 1 gedrückt und dort der Füllstand entsprechend vergrössert. Umgekehrt wird bei einer gewünschten Verkleinerung der Austragsleistung des Fördergefässes 1 durch Druckentlastung im Speicherraum 2 (Öffnen des Ventiles 13) Gut ganz rasch aus dem Fördergefäss 1 in den Speicherraum 2 überführt.

Die Einstellung, Konstanthaltung und Veränderung der Förderleistung sind damit praktisch unabhängig von den Eigenschaften der Gutzuführung zum Fördergefäss 1 über den Gutzuführanschluss 9. Die notwendige Nachspeisung des Gutes über die Zellenradschleuse 8 kann daher z.B. durch eine einfache Ein-/Ausschaltung erfolgen. Bei dem in Fig. 1 dargestellten Ausführungsbeispiel wird das von den Druckmessdosen 18 gelieferte Signal über den Rechner 19 dem Regler 22 zugeführt, der die Zellenradschleuse 8 so steuert, dass die Gesamtmenge des im Fördergefässes 1 und im Speicherraum 2 enthaltenen Gutes jeweils annähernd etwa konstant ist. An der Anzeigeeinrichtung 23, die ein dem Sollwert des Auflockerungsdruckes entsprechendes Signal erhält, kann man die jeweils eingestellte Förderleistung ablesen.

Das Fördergefäss 1, der Speicherraum 2 und die darin enthaltene Gutmenge werden zweckmässig so bemessen, dass bei maximaler Füllhöhe des Fördergefässes 1 eine minimale Füllhöhe des Fördergefässes 1 eine minimale Füllhöhe des Speicherraumes 2 und bei minimaler Füllhöhe des Fördergefässes 1 eine maximale Füllhöhe des Speicherraumes 2 vorhanden ist. Auf diese Weise steht die gesamte Kapazität des Speicherraumes 2 für rasche Änderungen der Förderleistung (nach oben oder unten) zur Verfügung.

Die Eichung der Anlage gemäss Fig. 1 erfolgt nach einem bevorzugten Verfahren wie folgt:

Bei geschlossenem Gutzuführanschluss 9 wird zunächst eine bestimmte Füllhöhe im Fördergefäss 1 eingestellt und in der erläuterten Weise mittels des Druckes des Speicherraumes 2 konstant gehalten (da bei geschlossenem Gutzuführanschluss 9 das aus dem Fördergefäss 1 ausgetragene Material vom Speicherraum 2 geliefert wird, muss während dieses Förderintervalles der Druck im Speicherraum 2 nachgeführt werden). Der sich hierbei einstellende pneumatische Auflockerungsdruck (der ebenso wie die Füllhöhe im Fördergefäss 1 konstant ist) wird gemessen. Gleichzeitig wird die Gewichtsabnahme des gesamten Systemes innerhalb dieses Förderintervalles ermittelt (diese Gewichtsabnahme entspricht dem in diesem Zeitintervall ausgetragenen Gut). Hieraus wird die Förderleistung errechnet (ausgetragene Gutmenge pro Zeiteinheit). Man gewinnt damit einen ersten Punkt der gewünschten Funktion (Förderleistung in Abhängigkeit vom pneumatischen Auflockerungsdruck).

Sodann wird der gleiche Vorgang wiederholt, indem im Fördergefäss 1 eine andere Füllhöhe (und damit eine andere Förderleistung) eingestellt wird. Durch mehrmaliges Wiederholen dieser Messung lassen sich beliebig viele Punkte der gesuchten Eichfunktion ermitteln, die dann dem Rechner eingegeben wird und damit im Betrieb die Einstellung einer gewünschten Förderleistung durch Vorgabe eines entsprechenden pneumatischen Auflockerungsdruckes (Bodendruckes) ermöglicht.

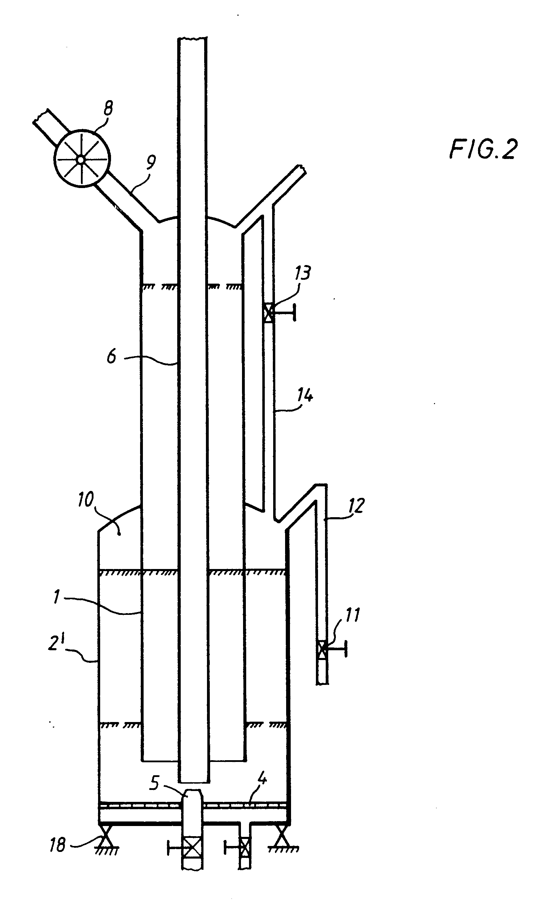

Während bei dem in Fig. 1 dargestellten Ausführungsbeispiel das Fördergefäss 1 und der Speicherraum 2 nebeneinander angeordnet sind, zeigt Fig. 2 eine Variante, bei der der Speicherraum 2' ringförmig ausgebildet und koaxial zum Fördergefäss 1 angeordnet ist. Im übrigen sind in Fig. 2 für gleiche Bauteile dieselben Bezugszeichen wie in Fig. 1 vorgesehen, so dass sich eine detaillierte Beschreibung erübrigt. Rechner, Regler sowie Steuerleitungen sind der Einfachheit halber in Fig. 2 weggelassen. Die Variante gemäss Fig. 2 zeichnet sich durch eine besonders gedrängte räumliche Bauweise aus, wobei die Überführung von Gut aus dem Speicherraum 2' in das Fördergefäss 1 und umgekehrt bedingt durch die koaxiale Anordnung besonders glatt, reibnungsarm und verzögerungsfrei erfolgt.

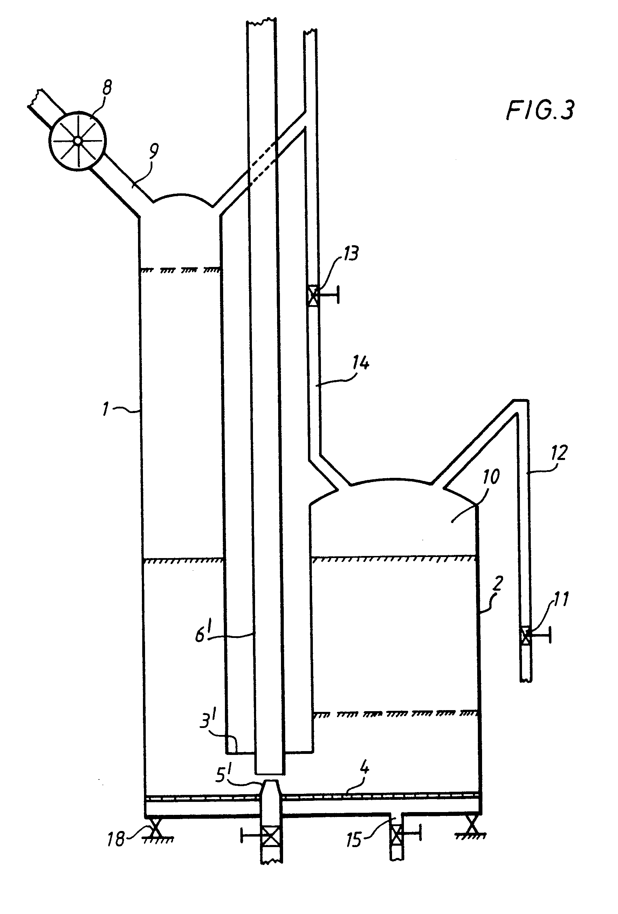

Fig. 3 zeigt ein Ausführungsbeispiel, bei dem – in Abwandlung der Variante gemäss Fig. 1 – die Förderdüse 5' und die Förderleitung 6' an den Verbindungsschenkel 3' zwischen Fördergefäss 1 und Speicherraum 2 angeschlossen sind. Bei dieser Ausführung kann die Förderleitung 6' gewünschtenfalls auch in anderer als vertikaler Richtung weitergeführt werden, etwa bereits knapp oberhalb der Förderdüse 5' um einen beliebigen Winkel aus der Zeichenebene heraus abgeknickt werden. Im übrigen entspricht das Ausführungsbeispiel der Fig. 3 dem der Fig. 1.

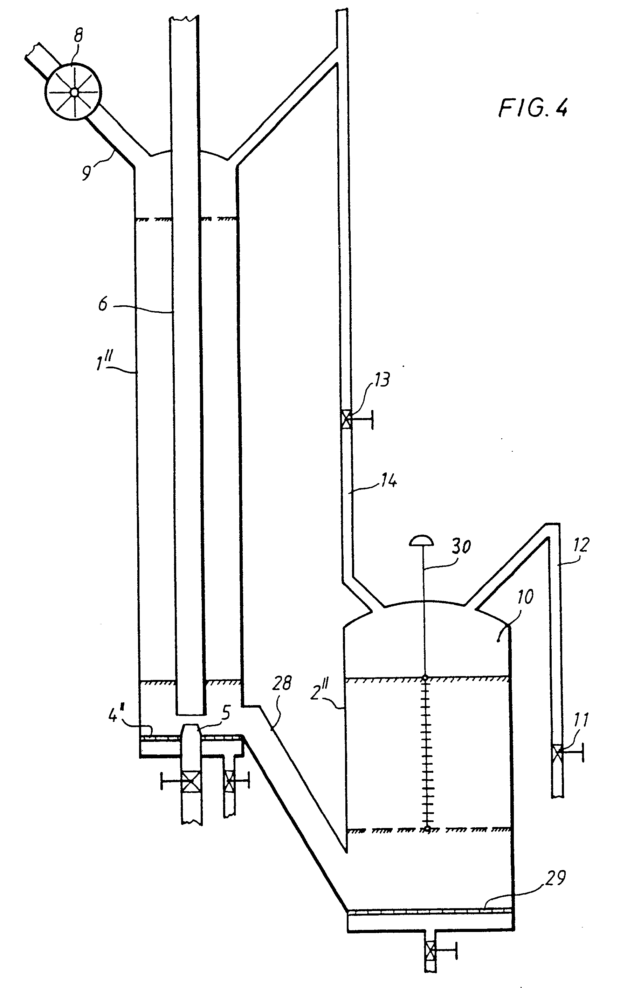

Bei der in Fig. 4 veranschaulichten Variante ist der Speicherraum 2" tiefer als das Fördergefäss 1" angeordnet und mit diesem über eine geneigte Gutleitung 28 verbunden. Das Fördergefäss 1" und der Speicherraum 2" sind hier mit gesonderten Auflockerungsböden 4" bzw. 29 versehen.

In weiterer Abwandlung gegenüber den bisher erläuterten Ausführungsbeispielen ist ferner bei der Ausführung gemäss Fig. 4 im Speicherraum 2″ eine Füllstandsmesseinrichtung 29 vorgesehen, die (statt der bei den erläuterten Ausführungsbeispielen vorgesehenen Druckmessdosen 18) das Signal für die Nachführung von Gut zum Fördergefäss 1″ über den Gutzuführanschluss 9 und die Zellenradschleuse 8 liefert, wenn z.B. eine gravimetrische Eichung der Förderleistung nicht gewünscht wird.

**Patentansprüche**

1. Verfahren zur kontinuierlichen pneumatischen Förderung von Feingut

a) unter Verwendung eines Fördergefässes (1) mit einem pneumatischen Auflockerungsboden (4) und einem im oberen Bereich des Fördergefässes (1) vorgesehenen Gutzuführanschluss, ferner mit einer im Bodenbereich des Fördergefässes (1) angeordneten Förderdüse (5) sowie einer mit ihrer Eintrittsöffnung nahe der Förderdüse (5) angeordneten pneumatischen Förderleitung (6), wobei das Fördergefäss (1) mit einem Entlüftungsanschluss (7) versehen ist, so dass

b) der pneumatische Auflockerungsdruck im Fördergefäss (1) bzw. der Druck der Förderdüse (5) bei mengenmässig konstant gehaltener Auflockerungs- bzw. Düsenluft der Füllhöhe (F) des Fördergefässes (1) entspricht und die Austragsleistung des Fördergefässes (1) bestimmt, gekennzeichnet durch folgende Merkmale:

c) die Austragsleistung wird durch Überführen von Gut aus einem Speicherraum (2) in das Fördergefäss (1) erhöht und durch Überführen von Gut aus dem Fördergefäss (1) in den Speicherraum (2) verringert,

d) das Gut im Speicherraum (2) steht unter einem regelbaren pneumatischen oder hydraulischen Druck, wobei die Gutbewegung zwischen dem Speicherraum (2) und dem Fördergefäss (1) durch Beeinflussung des auf das Gut im oberen Bereich (10) des Speicherraums (2) wirkenden Druckes gesteuert wird.

2. Verfahren nach Anspruch 1, dadurch gekennzeichnet, dass zur Konstanthaltung der Füllhöhe des Fördergefässes (1) der pneumatische Auflockerungsdruck überwacht und bei Abweichungen dieses Auflockerungsdruckes vom vorgegebenen Sollwert der auf das Gut im oberen Bereich (10) des Speicherraumes wirkende Druck geändert wird.

3. Verfahren nach Anspruch 1, wobei Fördergefäss (1) und Speicherraum (2) nach Art kommunizierender Röhren miteinander verbunden sind, gekennzeichnet durch eine solche Bemessung von Fördergefäss (1), Speicherraum (2) und darin enthaltener Gutmenge, dass bei maximaler Füllhöhe des Fördergefässes (1) eine minimale Füllhöhe des Speicherraumes (2) und bei minimaler Füllhöhe des Fördergefässes (1) eine maximale Füllhöhe des Speicherraumes (2) vorhanden ist.

4. Verfahren nach Anspruch 1, dadurch gekennzeichnet, dass die Zuführung von Gut zu dem das Fördergefäss (1) und den Speicherraum (2) enthaltenden System durch den Gutzuführanschluss (9) im oberen Bereich des Fördergefässes (1), vorzugsweise durch Ein-/Ausschaltung der Gutzuführung, in Abhängigkeit von einem Signal erfolgt, das auf Veränderungen der im System enthaltenen Gutmenge anspricht, vorzugsweise in Abhängigkeit eines dem Gewicht des gesamten Systemes entsprechenden Signales oder in Abhängigkeit der Füllhöhe des Speicherraumes (2).

5. Verfahren nach Anspruch 1, dadurch gekennzeichnet, dass zur Eichung der Anlage bei geschlossenem Gutzuführanschluss (9) jeweils eine bestimmte Füllhöhe (F) im Fördergefäss (1) eingestellt und mittels des Druckes im Speicherraum (2) konstant gehalten wird, der sich hierbei einstellende pneumatische Auflockerungsdruck beim Ausfliessen gemessen, die Gewichtsabnahme des gesamten Systemes innerhalb einer bestimmten Zeit ermittelt und hieraus die Förderleistung bestimmt wird, wobei diese Messungen nacheinander für verschiedene Werte der Füllhöhe des Fördergefässes (1) durchgeführt werden.

6. Vorrichtung zur Durchführung des Verfahrens nach Anspruch 1, dadurch gekennzeichndet, dass das Fördergefäss (1) und der Speicherraum (2) nach Art kommunizierender Röhren miteinander verbunden sind, wobei der Speicherraum gleichfalls einen pneumatischen Auflockerungsboden (4) aufweist und der oberhalb der Füllhöhe liegende Bereich (10) des Speicherraumes mit einem regelbaren Luftzufuhr- und Luftableitungsanschluss (12 bzw. 14) versehen ist.

7. Vorrichtung nach Anspruch 6, dadurch gekennzeichnet, dass das Fördergefäss (1) und der Speicherraum (2) nebeneinander angeordnet sind, wobei der Speicherraum (2) vorzugsweise einen grösseren Querschnitt und eine kleinere Höhe als das Fördergefäss (1) aufweist.

8. Vorrichtung nach Anspruch 6, dadurch gekennzeichnet, dass der ringförmig ausgebildete Speicherraum (2′) das Fördergefäss (1) koaxial umgibt.

9. Vorrichtung nach Anspruch 6, dadurch gekennzeichnet, dass das Fördergefäss (1) und der Speicherraum (2) auf gleicher Bodenhöhe angeordnet sind und einen gemeinsamen pneumatischen Auflockerungsboden (4) aufweisen.

10. Vorrichtung nach Anspruch 7, dadurch gekennzeichnet, dass der Speicherraum (2″) tiefer als das Fördergefäss (1″) angeordnet und mit diesem über eine geneigte Gutleitung (28) verbunden ist.

11. Vorrichtung nach Anspruch 7, dadurch gekennzeichnet, dass die Förderdüse (5′) und die Förderleitung (6′) an den Verbindungsschenkel (3′) zwischen Fördergefäss (1) und Speicherraum (2) angeschlossen sind.

12. Vorrichtung zur Durchführung des Verfahrens nach Anspruch 1, dadurch gekennzeichnet, dass zu einem Fördergefäss (1) mehrere Speicherräume (2) gehören, die gemeinsam oder wahlweise zu- und abschaltbar sind.

13. Vorrichtung zur Durchführung des Verfahrens nach Anspruch 1, dadurch gekennzeichnet, dass zu einem Speicherraum (2) mehrere Fördergefässe (1) gehören, die gemeinsam oder wahlweise zu- und abschaltbar sind.

**Claims**

1. Method for continously and pneumatically transporting particulate matter
a) using a conveyor vessel (1) having a pneumatic aerating base (4) and a particulate matter supply connection (9) provided in the upper region of the conveyor vessel (1), also having a conveyor nozzle (5) arranged in the base region of the conveyor vessel (1) and a pneumatic feed pipe (6) provided with its inlet opening near the conveyor nozzle (5),
b) the conveyor vessel (1) being provided with an air vent connection (7) so that when the quantity of aerating air or nozzle air is kept constant the pneumatic aerating pressure in the conveyor vessel (1) or the pressure of the conveyor nozzle (5) corresponds to the filling level (F) of the conveyor vessel (1) and determines the discharge capacity of the conveyor vessel (1),
characterised by the following features:
c) the discharge capacity is increased by transferring particulate matter from a storage chamber (2) to the conveyor vessel (1) and is reduced by transferring particulate matter from the conveyor vessel (1) to the storage chamber (2),
d) the particulate matter in the storage chamber (2) is under a regulable pneumatic or hydraulic pressure, the movement of particulate matter between the storage chamber (2) and the conveyor vessel (1) being controlled by influencing the pressure exerted on the particulate matter in the upper region (10) of the storage chamber (2).

2. Method according to claim 1, characterised in that for keeping the filling level in the conveyor vessel (1) constant the pneumatic aerating pressure is monitored and when this aerating pressure deviates from the predetermined theoretical value the pressure exerted on the particulate mattter in the upper region (10) of the storage chamber is altered.

3. Method according claim 1 in which the conveyor vessel (1) and the storage chamber (2) are connected to each other like communicating pipes, characterised in that the conveyor vessel (1), the storage chamber (2) and the quantity of particulate matter contained therein are of such dimensions that when the filling in the conveyor vessel (1) is at maximum there is a minimum filling level in the storage chamber (2) and when the filling level in the conveyor vessel (1) is at minimum there is a maximum filling level in the storage chamber (2).

4. Method according claim 1, characterised in that the particulate matter is supplied to the system containing the conveyor vessel (1) and the storage chamber (2) via the particulate matter supply connection (9) in the upper region of the conveyor vessel (1), preferably by switching the particulate matter supply on/off, as a function of a signal which responds to alterations in the quantity of particulate matter contained in the system, preferably as a function of a signal corresponding to the weight of the whole system or as a function of the filling level in the storage chamber (2).

5. Method according claim 1, characterised in that in order to calibrate the apparatus with the particulate matter supply connection (9) closed a specific filling level (F) is in each case set in the conveyor vessel (1) and kept constant by means of the pressure in the storage chamber (2), the pneumatic aerating pressure thus set is measured during the outflow, the reduction in weight of the whole system within a specific period of time is determined and from this the conveying capacity is calculated, these measurements being carried out successively for different values of the filling level in the conveyor vessel (1).

6. Apparatus for carrying out the method according claim 1, characterised in that the conveyor vessel (1) and the storage chamber (2) are connected to each other like communicating pipes, the storage chamber also has a pneumatic aerating base (4) and the region (10) of the storage chamber lying above the filling level is provided with regulable air supply and extraction connections (12 and 14 respectively).

7. Apparatus according claim 6, characterised in that the conveyor vessel (1) and the storage chamber (2) are arranged adjacent to one another, the storage chamber (2) being preferably greater in cross-section and lower in height than the conveyor vessel (1).

8. Apparatus according claim 6, characterised in that the storage chamber (2') is of annular construction and surrounds the conveyor vessel (1) coaxially.

9. Apparatus according claim 7, characterised in that the conveyor vessel (1) and the storage chamber (2) are arranged with their bases at the same height and are provided with a common pneumatic aerating base (4).

10. Apparatus according claim 7, characterised in that the storage chamber (2") is arranged lower than the conveyor vessel (1") and is connected to the latter via an inclined particulate matter pipe (28).

11. Apparatus according claim 7, characterised in that the conveyor nozzle (5') and the conveyor pipe (6') are connected to the connecting part (3') between the conveyor vessel (1) and the storage chamber (2).

12. Apparatus for carrying out the method according claim 1, characterised in that a plurality of storage chambers (2) are associated with one conveyor vessel (1) and can be switched on and off jointly or selectively.

13. Apparatus for carrying out the method according claim 1, characterised in that a plurality of conveyor vessels (1) are associated with one storage chamber (2) and can be switched on and off jointly or selectively.

**Revendications**

1. Procédé de transport pneumatique en continu de matière en particules fines

a) à l'aide d'une cuve de transfert (1) comprenant au fond un plateau pneumatique de désagrégation (4) et, à la partie supérieure, un raccord d'amenée de matière (9), le fond de ladite cuve (1) étant par ailleurs équipé d'un ajutage de transfert (5) et une canalisation pneumatique de transfert (6) étant disposée de manière que son orifice d'entrée soit à proximité dudit ajutage (5),

b) ladite cuve de transfert (1) étant équipée d'un raccord de purge d'air (7) de manière que la pression pneumatique de désagrégation à l'intérieur de la cuve (1) et que la pression de l'ajutage de transfert (5) correspondent au niveau de remplissage (F) de cette cuve (1) et déterminent le débit d'évacuation de cette dernière à débit de l'air de désagrégation et de l'air de l'ajoutage maintenu à une valeur constante,

procédé caractérisé par les particularités suivantes:

c) le débit d'evacuation s'élève par déplacement de matière d'une chambre de réserve (2) dans la cuve de transfert (1) et diminue par déplacement de matière de ladite cuve (1) dans la chambre de réserve (2),

d) la matière se trouvant dans la chambre de réserve (2) est soumise à une pression réglable pneumatique ou hydraulique, le déplacement de matière entre la chambre de réserve (2) et la cuve de transfert (1) se commandant par régulation de la pression s'exerçant sur la matière à la partie supérieure (10) de la chambre de réserve (2).

2. Procédé selon la revendication 1, caractérisé en ce qu'il consiste à contrôler la pression pneumatique de désagrégation pour maintenir le niveau de remplissage de la cuve de transfert (1) à une valeur constante et, en cas d'écart de cette pression de désagrégation par rapport à une consigne prescrite, la pression s'exerçant sur la matière à la partie supérieure (10) de la chambre de réserve subit une modification.

3. Procédé selon la revendication 1, la cuve de transfert (1) et la chambre de réserve (2) étant reliées à la manière de vases communicants, caractérisé en ce qu'il consiste à dimensionner ladite cuve (1), ladite chambre de réserve (2) ainsi que la quantité de matière que contiennent ces dernières de manière que le niveau de remplissage de ladite chambre (2) atteigne un minimum lorsque celui de la cuve (1) atteint un maximum et que le niveau de remplissage de cette chambre (2) atteigne un maximum lorsque celui de la cuve (1) atteint un minimum.

4. Procédé selon la revendication 1, caractérisé en ce que la matière arrive dans le système comprenant la cuve de transfert (1) et la chambre de réserve (2) par le raccord d'amenée (3) à la partie supérieure de ladite cuve (1), de préférence par admission à tout ou rien, en fonction d'un signal qui répond aux variations de la quantité de matière que contient le système, de préférence en fonction d'un signal correspondant au poids de l'ensemble du système ou en fonction du niveau de remplissage de la chambre de réserve (2).

5. Procédé selon la revendication 1, caractérisé en ce que l'étalonnage de l'installation s'effectue, avec le raccord (9) d'amenée de matière fermé, par réglage d'un niveau déterminé de remplissage (F) de la cuve de transfert (1) et par maintien de ce niveau à une valeur constante au moyen de la pression régnant dans la chambre de réserve (2), la pression pneumatique de désagrégation qui s'établit alors au cours de l'écoulement étant mesurée, la diminution de poids de l'ensemble du système pendant un certain temps étant déterminée et la capacité de transfert étant calculée d'après ces données, ces mesures étant effectuées successivement pour différentes valeurs du niveau de remplissage de la cuve de transfert (1).

6. Dispositif pour la mise en œuvre du procédé selon la revendication 1, caractérisé en ce que la cuve de transfert (1) et la chambre de réserve (2) sont reliées à la manière de vases communicants, la chambre de réserve étant également équipée au fond d'un plateau pneumatique de désagrégation (4) et la partie (10) de la chambre de réserve qui se trouve au-dessus du niveau de remplissage étant équipée de raccords réglables d'admission et d'évacuation d'air (12 et 14).

7. Dispositif selon la revendication 6, caractérisé en ce que la cuve de transfert (1) et la chambre de réserve (2) sont juxtaposées, ladite chambre (2) ayant de préférence une section plus grande et une hauteur plus petite que celles de la cuve de transfert (1).

8. Dispositif selon la revendication 6, caractérisé en ce que la chambre annulaire de réserve (2') entoure coaxialement la cuve de transfert (1).

9. Dispositif selon la revendication 6, caractérisé en ce que les fonds de la cuve de transfert (1) et de la chambre de réserve (2) sont disposés au même niveau et comportent un plateau pnematique commun de désagrégation (4).

10. Dispositif selon la revendication 7, caractérisé en ce que la chambre de réserve (2") est plus bas que la cuve de transfert (1") et communique avec cette dernière par une canalisation inclinée (28) par laquelle la matière se déplace.

11. Dispositif selon la revendication 7, caractérisé en ce que l'ajutage de transfert (5') et la canalisation de transfert (6') sont raccordés à la branche (3') de liaison de la cuve de transfert (1) et de la chambre de réserve (2).

12. Dispositif pour la mise en œuvre du procédé selon la revendication 1, caractérisé en ce que plusieurs chambres de réserve (2) appartiennent à une cuve de transfert (1) et se branchent ou se débranchent ensemble ou sélectivement.

13. Disositif pour la mise en œuvre du procédé selon la revendication 1, caractérisé en ce que plusieurs cuves de transfert (1) appartiennent à une chambre de réserve (2) et se branchent ou se débranchent ensemble ou sélectivement.

FIG.1

FIG.2

FIG.3

0121599

FIG. 4

15